# EUROPEAN PATENT SPECIFICATION

(11) **EP 2 405 417 B1**
(45) Date of publication and mention of the grant of the patent: **12.06.2013**
(21) Application number: 11171753.4
(22) Date of filing: 28.06.2011
(51) Int. Cl.: G08G 5/00, G01C 23/00

(54) **System for displaying a procedure to an aircraft operator during a flight of an aircraft**
System zur Anzeige eines Verfahrens an einen Flugzeugführer während des Flugs eines Flugzeugs
Système pour afficher une procédure à un opérateur d'avion pendant le vol de l'avion

(30) Priority: 07.07.2010 US 831742
(43) Date of publication of application: 11.01.2012
(73) Proprietor: Honeywell International, Inc., Morristown, NJ 07962-2245 (US)
(72) Inventor: Wilson, Blake, Morristown, NJ New Jersey 07962-2245 (US); Burgin, Roger W., Morristown, NJ New Jersey 07962-2245 (US); Pepitone, Dave, Morristown, NJ New Jersey 07962-2245 (US); Srivastav, Amit, Morristown, NJ New Jersey 07962-2245 (US)
(74) Representative: Buckley, Guy Julian

(56) References cited:
- EP-A1- 1 764 759
- EP-A1- 2 309 474
- WO-A1-03/023734
- WO-A1-2005/057133
- US-A1- 2006 238 511
- US-B1- 6 389 355

## Description

### TECHNICAL FIELD

The present invention generally relates to display systems, and more particularly relates to display systems configured to display a procedure to an aircraft operator during a flight of an aircraft.

### BACKGROUND

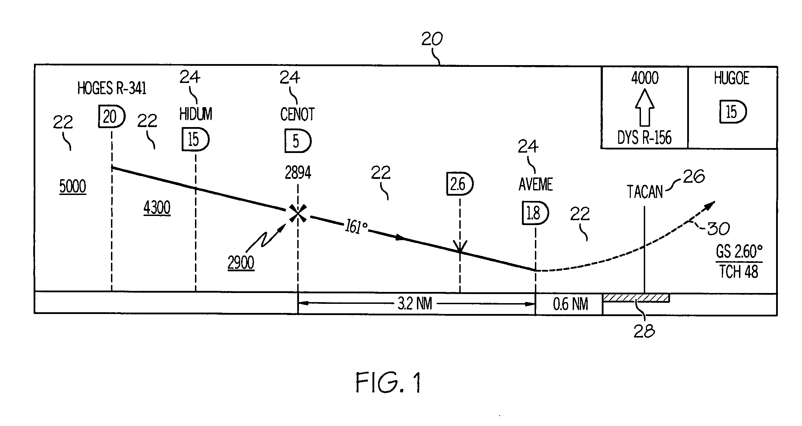

Instrument flight rule (IFR) approach plates are widely used in aviation and commonly include vertical profiles that present information relevant to an aircraft operator as the aircraft operator approaches a landing strip. FIG. 1 depicts a typical prior art vertical profile 20. As shown in FIG. 1, prior art vertical profile 20 presents a side view of a recommended flight path and includes a depiction of multiple route segments 22 that are to be flown by an aircraft that is following the illustrated approach. Each illustrated route segment is bounded by a pair of vertical lines and contains information identifying a plurality of recommended altitudes when the aircraft is positioned at various respective distances from the landing strip. Vertical profiles also include multiple waypoint identifiers 24 (which typically correspond with the vertical lines), navigation aids 26, and runways 28 and may also provide missed approach procedures 30. While vertical profiles such as prior art vertical profile 20 are commonly utilized for IFR approach procedures, they may also be used to display relevant information for other stages of a flight.

Vertical profiles have historically been provided to aircraft operators in paper form. Recently, they have increasingly become available to aircraft operators in electronic format. In particular, vertical profiles have been presented to aircraft operators on cockpit mounted displays. However, IFR approaches have also become increasingly complex. For example, IFR approaches have increased the length of the flight path that an aircraft must follow on IFR approach and have correspondingly increased the number of waypoints and route segments that an aircraft must pass through on approach. Consequently, the number of route segments that must be presented to an aircraft operator in a vertical profile has correspondingly increased.

Although the aforementioned presentation of IFR approach information has been adequate, it may be improved. Specifically, for any given display screen, as the number of route segments displayed is increased, the size of each individual route segment may decrease. As a result, the readability of the information presented in each route segment may be diminished. To improve readability for each route segment, the vertical profiles on the display screen have been truncated, which may be undesirable to aircraft operators.

Accordingly, it is desirable to present an aircraft operator with a vertical profile that is readable regardless of the length of a corresponding flight path. In addition, it is desirable to present an aircraft operator with a vertical profile that corresponds to an entire flight path. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention provides a system as defined in claim 1. The system may include the features of any one or more of dependent claims 2 to 9.

Various non-limiting embodiments of a system for displaying a procedure to an aircraft operator during a flight of an aircraft are disclosed herein.

In an embodiment, by way of example only, the system includes, but is not limited to, a display unit, a data storage unit that is configured to store the procedure, an input unit, and a processor that is communicatively connected to the display unit, to the data storage unit, and to the input unit. The processor is configured to obtain the procedure from the data storage unit, to receive an input from the input unit, and to provide commands to the display unit to display the procedure as a vertical profile having a compressed portion and an expanded portion, the expanded portion corresponding to the input.

In another embodiment, by way of example only, the system includes, but is not limited to, a display unit, a data storage unit that is configured to store the procedure, an input unit that is configured to receive an input from the aircraft operator, and a processor that is communicatively connected to the display unit, to the data storage unit, and to the input unit. The processor is configured to obtain the procedure from the data storage unit, to receive an input from the input unit, and to control the display unit to display the procedure as a vertical profile having a compressed portion and an expanded portion, the expanded portion corresponding to the input.

In still another embodiment not encompassed by the present invention as defined in the claims, by way of example only, the system includes, but is not limited to, a display unit, a data storage unit that is configured to store the procedure, an input unit comprising a position determining unit that is configured to determine a position and a heading of the aircraft, and a processor that is communicatively connected to the display unit, to the data storage unit and to the input unit. The input unit is configured to provide the position and the heading of the aircraft to the processor, wherein the processor is configured to obtain the procedure from the data storage unit, and to control the display unit to display the procedure as a vertical profile having a compressed portion and an expanded portion, the expanded portion corresponding to the position and heading of the aircraft.

### BRIEF DESCRIPTION OF THE DRAWINGS

The present invention will hereinafter be described in conjunction with the following drawing figures, wherein like numerals denote like elements, and

FIG. 1 is an illustration of a prior art vertical profile for an IFR approach procedure to a landing strip;

FIG. 2 is a schematic view illustrating a system for displaying a procedure to an aircraft operator during a flight of an aircraft, in accordance with an embodiment;

FIGS. 3-6 are non-limiting examples of vertical profiles for IFR approach procedures generated using the system of FIG. 2, in accordance with an embodiment; and

FIGS. 7-9 are non-limiting examples of vertical profiles for IFR approach procedures generated using the system of FIG. 2, in accordance with another embodiment.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved system has been provided for use on board an aircraft that displays a vertical profile in a manner that displays a portion of the vertical profile in a compressed format and that displays a portion of the vertical profile in an expanded format. The portion displayed in the compressed format may include only minimal information (or, in some cases, no information at all) about the route segments and waypoints contained therein to thereby consume only a minimal amount of space on a display screen. The portion displayed in the expanded format may contain substantially the same information as is presently displayed in prior art vertical profiles, such as a recommended altitude or altitudes, a route segment length, relevant navigation instructions, an identification of a landing strip, missed approach procedures, etc .... Displaying the vertical profile in this manner may present the aircraft operator with a complete vertical profile, each segment of which can be made readable, thus allowing the aircraft operator to focus on portions of the vertical profile that are relevant or of interest to the aircraft operator while compressing those portions that are not of interest or that have little or no relevance to the aircraft operator (e.g., route segments that the aircraft has already passed through).

In an embodiment, the system includes a processor that is communicatively connected to a display unit, a data storage unit, and an input unit. The data storage unit is configured to store information pertaining to any type of procedure including, but not limited to, an IFR approach procedure. In an embodiment, the data storage unit may be configured to store several procedures and the processor may be configured to permit the aircraft operator to select a procedure for display, while in other embodiments, such selection may be accomplished through automatic means. The processor is configured to retrieve the information pertaining to the procedure from the data storage unit and to control the display unit to display the procedure in a compressed format.

According to an embodiment, the input unit is configured to select a portion of the procedure for display in expanded format. For instance, the input unit may be a cursor control device that is configured to permit the aircraft operator to select a portion of the procedure for viewing in the expanded format. In other embodiments, the input unit may be a position determining unit that is configured to determine a position and a heading of the aircraft, and to automatically provide position and heading information to the processor which, in turn, controls the display unit to expand a portion of the procedure that corresponds with the position and the heading of the aircraft. In still other embodiments, two input units may be employed, a first being configured to receive inputs from the aircraft operator and a second being configured to detect the position and the heading of the aircraft.

A further understanding of the embodiments of the system disclosed herein may be obtained through a review of the illustrations accompanying this application together with a review of the detailed description that follows.

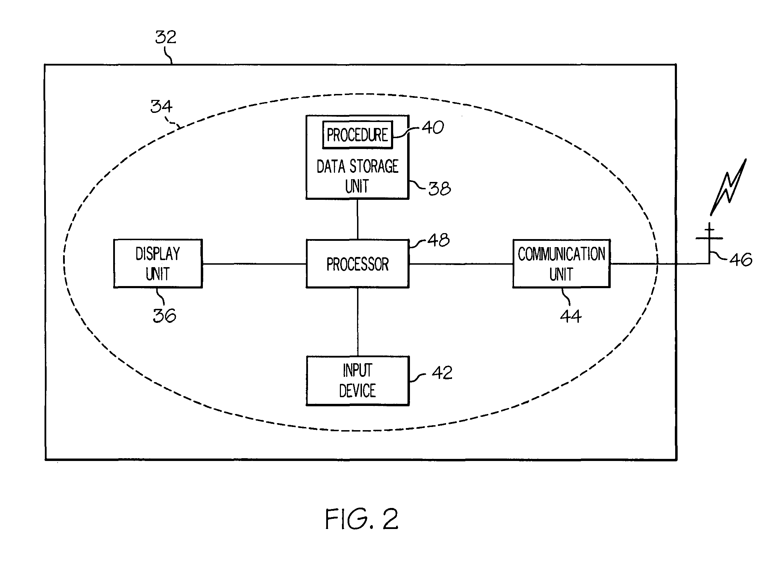

FIG. 2 is a schematic view illustrating a system 34 for displaying a procedure to an aircraft operator during a flight of an aircraft 32, in accordance with an embodiment. Aircraft 32 may be any type of aircraft including a fixed wing aircraft, a rotor driven aircraft and/or a lighter than air aircraft. Furthermore, system 34 is not limited to use only with vehicles that remain within the earth's atmosphere, but may also be used with spacecraft or watercraft.

In an embodiment, system 34 may be a self-contained unit installed in the cockpit of aircraft 32 and may include components that are used exclusively with system 34. In another embodiment, system 34 may have components which are housed separately from one another and which may be spaced apart from one another throughout aircraft 32. In still other embodiments, system 34 may share its components with other systems on board aircraft 32.

System 34 includes a display unit 36, in an embodiment. Display unit 36 may be any sort or type of display system that is configured to depict both three-dimensional graphic images and text. In an embodiment, display unit 36 may include a display screen while in other embodiments, display unit 36 may include holographic projectors. Examples of suitable display systems include, but are not limited to, a Cathode Ray Tube (CRT) display device, a flat panel display device, a Liquid Crystal Display (LCD) device, a thin film transistor (TFT) display device, a plasma display device, an electro-luminescent display device, a Light Emitting Diode (LED) display device, a holographic display device such as a Heads Up Display (HUD), a Micro Mirror Device (MMD) display device or the like. In another embodiment, the display unit 36 may include multiple individual display screens communicatively connected or otherwise configured to cooperate with one another. An example of a suitable display unit 36 would include any type of synthetic vision system display such as an integrated primary flight display. Synthetic vision system displays are known in the art and are frequently configured to provide aircraft operators with three-dimensional depictions of terrain around the aircraft and to present text and symbology over such three-dimensional depictions. Other suitable displays may include near to eye displays worn by aircraft operators and configured to present images on a screen, lens or projector disposed proximate to the aircraft operator's eye. In still other embodiments, display unit 36 may comprise a HUD. In some embodiments, display unit 36 may be dedicated for use exclusively with system 34 while in other embodiments display unit 36 may be shared with other systems on board aircraft 32.

System 34 further includes a data storage unit 38, in an embodiment. In accordance with an embodiment, data storage unit 38 is an electronic memory device that is configured to store data. Data storage unit 38 may be any type of data storage component including, without limitation, non-volatile memory, disk drives, tape drives, and mass storage devices and may include any suitable software, algorithms and/or sub-routines that provide the data storage component with the capability to store, organize, and permit retrieval of data. In an embodiment, data storage unit 38 is configured to store data relating to one or more procedures 40 which are to be followed by a aircraft operator of aircraft 32 at certain points during a flight. In some examples, procedure 40 may comprise an IFR approach procedure. In other embodiments, procedure 40 may comprise any other type of flight procedure to be followed by an aircraft operator of aircraft 32. In still other embodiments, data storage unit 38 may store a plurality of procedures 40 for use with system 34. In such embodiments, system 34 may be configured to permit the aircraft operator or other member of an aircrew to select a desirable procedure 40, while in other embodiments, system 34 may be configured to automatically select an appropriate procedure 40. In some embodiments, data storage unit 38 may be dedicated for use exclusively with system 34 while in other embodiments, data storage unit 38 may be shared with other systems on board aircraft 32.

System 34 further includes an input unit 42, in an embodiment. Input unit 42 may be a component that is configured to provide inputs into system 34. In another embodiment, input unit 42 may comprise any component that is suitable to receive inputs from the aircraft operator or other aircrew member of aircraft 32. For example, and without limitation, input unit 42 may be a keyboard, a mouse, a trackball, a touch screen, a tablet and stylus, a button, a switch, a knob, a slide, a microphone, a camera, a motion detector, or any other device that is configured to permit a human to provide inputs into an electronic system. In other embodiments, input unit 42 may be a self contained or independent system, such as a flight management system, that is, itself, configured to receive inputs from the aircraft operator of aircraft 32 and which, as part of its functioning, provides outputs which are received as inputs by system 34.

In accordance with another embodiment, input unit 42 is a position determining unit that is configured to detect and/or to determine the position of aircraft 32 with respect to the earth (e.g. latitude and longitude coordinates) as well as the heading of aircraft 32 and, in some examples, the altitude of aircraft 32. In such an embodiment, the position determining unit may be a single integrated unit such as, but not limited to, a global positioning system (GPS) navigation system or an inertial navigation system. In other embodiments, such a position determining unit may comprise a plurality of discrete systems, each providing one or more items of information pertaining to the location of aircraft 32, which may be aggregated together to arrive at the location, the altitude, and the heading of aircraft 32. The position determining unit may be configured to determine the position of aircraft 32 at regular time intervals while in other embodiments, it may be configured to determine the position of aircraft 32 only in response to an interrogation made by another onboard system for such location information. In some embodiments, input unit 42 may be dedicated for use exclusively with system 34 while in other embodiments input unit 42 may be shared with other systems on board aircraft 32.

System 34 further includes a communication unit 44, in an embodiment. Communication unit 44 may be any type of communication device that is configured to receive wireless communications. Communication unit 44 may be configured to receive satellite communication transmissions, microwave transmissions or any other type of RF transmissions. In an embodiment, communication unit 44 cooperates with an antenna 46 to detect and receive such wireless communication signals. Communication unit 44 may include associated electronics to process the received signals. In an example, communication unit 44 may be configured to receive data link transmissions from ground controllers. In some embodiments, communication unit 44 may be dedicated for use exclusively with system 34 while in other embodiments communication unit 44 may be shared with other systems on board aircraft 32.

System 34 further includes a processor 48. Processor 48 may be any type of onboard computer, computer system, or microprocessor that is configured to perform algorithms, to execute software applications, to execute sub-routines and/or to be loaded with and to execute any other type of computer program. Processor 48 may comprise a single processor or a plurality of processors acting in concert, in an embodiment. In some embodiments, processor 48 may be dedicated for use exclusively with system 34 while in other embodiments processor 48 may be shared with other systems on board aircraft 32.

Processor 48 is communicatively connected to display unit 36, data storage unit 38, input unit 42 and communication unit 44, in accordance with an embodiment. Such connection may be effected through the use of any suitable means of transmission including both wired and wireless connections. For example, each component may be physically connected to processor 48 via a coaxial cable or via any other type of wire connection effective to convey signals. In the illustrated embodiment, processor 48 is directly communicatively connected to each of the other components. In other embodiments, each component may be communicatively connected to processor 48 across a vehicle bus. In still other examples, each component may be wirelessly connected to processor 48 via a Bluetooth connection, a WiFi connection or the like.

Being communicatively connected provides a pathway for the transmission of commands, instructions, interrogations and other signals between processor 48 and each of the other components. Through this communicative connection, processor 48 may control and/or communicate with each of the other components. Each of the other components discussed above are configured to interface and engage with processor 48. For example, in some embodiments, display unit 36 is configured to receive commands from processor 48 and to display images in response to such commands. In other embodiments, input unit 42 may be configured as a position determining unit and is configured to provide position information to processor 48 while in other embodiments, input unit 42 may be configured as a cursor control device that is configured to convert aircraft operator actions and/or movements into electronic signals and to communicate such signals to processor 48. In another embodiment, data storage unit 38 is configured to receive interrogations from processor 48 and to retrieve and provide data, including one or more procedures 40, to processor 48 in response to such interrogations. In accordance with another embodiment, communication unit 44 is configured to automatically provide communication signals received through antenna 46 to processor 48 while in still other embodiments communication unit 44 is configured to store such signals and to provide such signals to processor 48 in response to an interrogation from processor 48 for such signals.

Processor 48 is configured to interact with, coordinate and/or orchestrate the activities of each of the other components of system 34 for the purpose of displaying a procedure to an aircraft operator during a flight of an aircraft, in an embodiment. Processor 48 is programmed and/or otherwise configured to control display unit 36 to display a vertical profile to include a compressed portion, and, in some instances, an expanded portion. Input unit 42 is utilized to select a portion or portions of the vertical profile to be expanded. Several display strategies will now be described. It should be understood that the display strategies described below are not a complete listing of all possible display strategies that may be displayed using system 34 and that other display strategies may be employed without departing from the teachings of this disclosure.

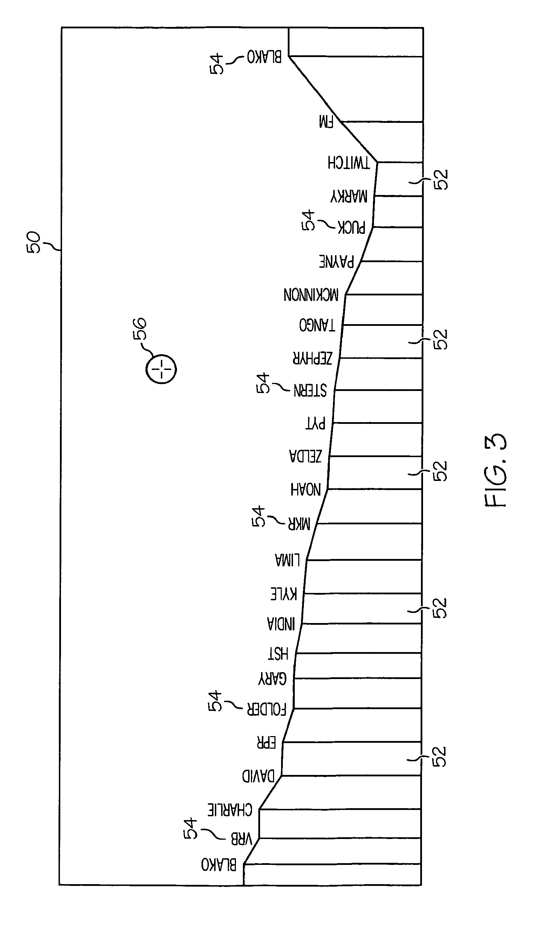

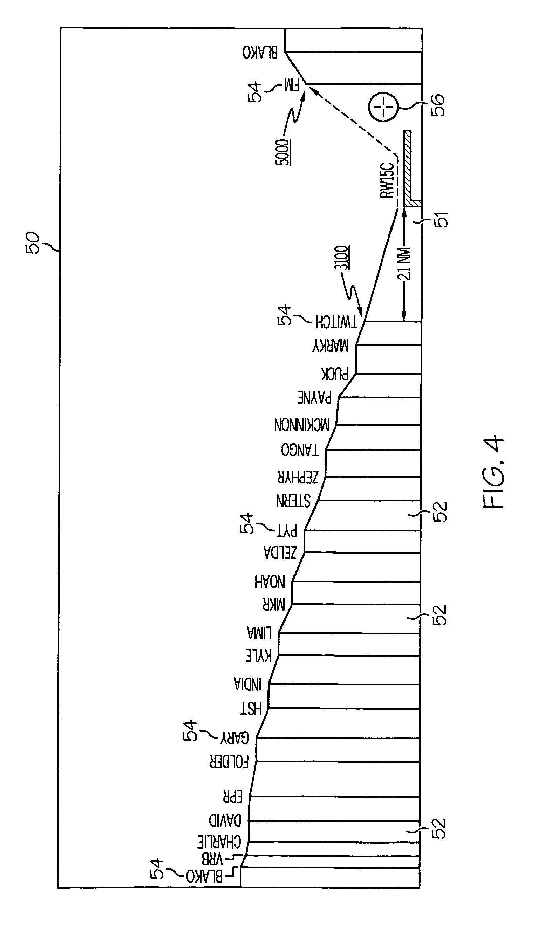

FIGs. 3 and 4 are non-limiting examples of a vertical profile 50 for an IFR approach procedure generated using the system of FIG. 2, in accordance with an embodiment. Prior to seeing the display presented in FIG. 3, an aircraft operator will see the power up default display. The power up default display would be appear while aircraft 32 is on the ground when the aircraft operator first turns on the avionics on board the aircraft. In some embodiments, the power up default display would resemble a vertical profile but would not include any route segments or waypoint designators (discussed below) and may simply display terrain features, a distance axis and an altitude axis. The route segments, waypoint designators, and the compression thereof as discussed below would occur as the aircraft operator enters the flight plan into the aircraft's flight management system. In some embodiments, the pilot would have an input device to allow the pilot to toggle between a startup display, a standard vertical profile, and a vertical profile according to the teachings of the present disclosure.

With respect to FIG. 3, the exemplary vertical profile 50 has been rendered by system 34 and displayed on a display screen of display unit 36. Processor 48 obtains the information contained in vertical profile 50 from data storage unit 38. For example, in embodiments where input unit 42 is an input device that is configured to receive inputs from the aircraft operator, the aircraft operator may have selected vertical profile 50 from among several vertical profiles. In other embodiments where input unit 42 is a position determining unit, the selection of vertical profile 50 may have been made automatically by processor 48 using the current position and heading of aircraft 32.

In FIGs. 3 and 4, vertical profile 50 has been rendered by an embodiment of system 34 wherein input unit 42 comprises a cursor control device. Such an embodiment enables the aircraft operator to select a portion of vertical profile for expansion. FIG. 3 illustrates vertical profile 50 in a compressed format. As illustrated in FIG. 3, vertical profile 50 includes twenty four route segments 52, each located between two respective waypoint designators 54. The term "waypoint designator", as used herein, refers to an alphanumeric expression comprising letters, numbers or both which is used to identify a specific geographic location that is used for the purpose of assisting air traffic controllers and pilots in defining a navigation route or flight plan, among other purposes. Each of the twenty four route segments 52 is compressed, and the only information available for each route segment 52 is an identification of its two corresponding waypoint designators 54. In another embodiment, the two corresponding waypoint designators 54 may not be shown. By compressing each route segment in this manner, any desired number of route segments 52 may be displayed.

Overlaying the display of vertical profile 50 is a cursor 56. Using input unit 42, the aircraft operator may position cursor 56 over any desired portion of vertical profile 50. In FIG. 3, the cursor 56 is positioned so that it does not overlay any of the route segments 52. Accordingly, none of the route segments 52 are displayed in an expanded format. In other embodiments, processor 48 may be configured to control display unit 36 to maintain the most recently expanded route segment 52 in an expanded format after the aircraft operator has removed cursor 56 to a position that does not overlay any of the route segments 52.

In still other embodiments, input unit 42 may be a device other than a cursor control device that permits the aircraft operator to select route segments 52 for expansion. For example, input unit 42 may be a keyboard that permits the aircraft operator to type in the name of the waypoint designators 54 bounding the route segment 52 of interest. In other embodiments, input unit 42 may be a microphone, and processor 48 may be configured with appropriate voice recognition software that permits the aircraft operator to speak aloud the waypoint designators 54 or other designators of interest to select route segments 52 of interest. In still other embodiments, display unit 36 may be combined with input unit 42 in the form of a touch screen device that permits the aircraft operator to simply touch a portion of a display screen corresponding with the route segments 52 of interest to effect the selection.

FIG. 4 illustrates vertical profile 50 including a route segment 51 displayed in an expanded format, according to an embodiment. With respect to FIG. 4, the cursor 56 has been moved to a position on the display screen that overlays the route segment 51 that is located between two of the waypoint designators 54 illustrated in vertical profile 50, TWTCH and FM (the "overlaid route segment"). Processor 48 is configured to detect that the position of cursor 56 coincides with the position of the overlaid route segment and is further configured to retrieve information relating to the overlaid route segment from data storage unit 38 and to control display unit 36 to display the overlaid route segment in an expanded format, in an embodiment. In other embodiments, rather than simply overlaying a route segment of interest, an aircraft operator may need to take an additional action, such as clicking a mouse, to select the route segment.

When displayed in expanded format, the overlaid route segment is enlarged and displayed to include both graphical and textual information useful to the aircraft operator for navigating through that portion of the flight. When the overlaid segment is enlarged, some or all of the remaining segments are further compressed to accommodate the increased size of the overlaid segment. Information that is displayed to the aircraft operator while the overlaid route segment is displayed in the expanded format may include the length of that segment of the approach, the recommended altitudes at the corresponding waypoint designators 54, a recommended rate of descent, distance to go between route segments, information relating to navigation aids within the route segment and the like. After the aircraft operator has completed his review of the overlaid route segment, the aircraft operator may move cursor 56 to a different route segment 52 of vertical display 50. At that time, processor 48 would control display unit 36 to compress the overlaid route segment and to expand the next route segment 52 that is overlaid by cursor 56. In other embodiments, the expanded route segment may be compressed in other ways. For example, an aircraft operator may click or double click on the expanded route segment using input unit 42. Alternatively, the aircraft operator may actuate another input devise such as a dedicated button or toggle switch which allows the aircraft operator to switch back and forth between an expanded and a compressed view for the selected route segment or segments. Additionally, turning the aircraft's electrical system off, and then on again (while the aircraft is on the ground) may also cause any expanded route segments to compress.

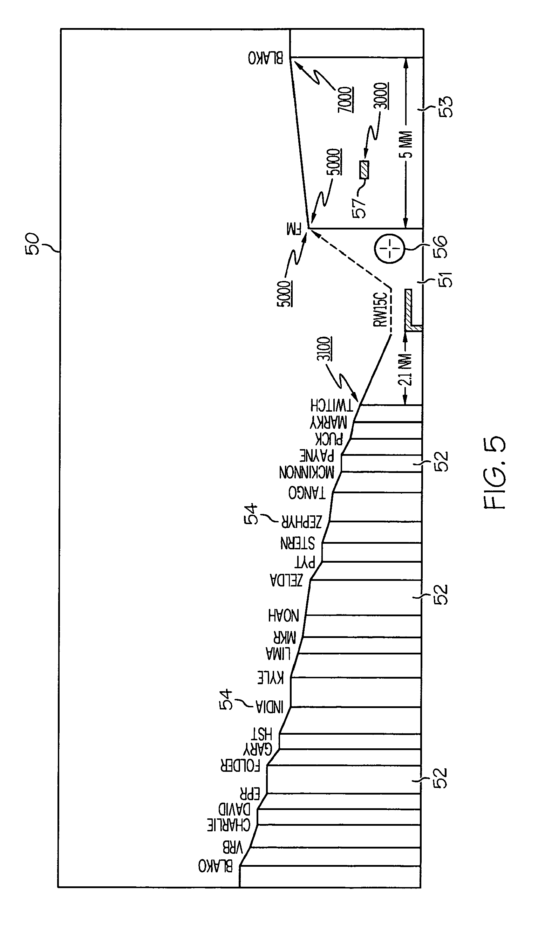

FIG. 5 is vertical profile 50 including route segments 51, 53 in expanded format, in accordance with another embodiment. In FIG. 5, not only is the overlaid route segment displayed in the expanded format, but a single adjacent route segment 53 is also displayed in the expanded format. In the illustrated embodiment, the single adjacent route segment that has been displayed in the expanded format is the next route segment after the overlaid route segment in the sequence of route segments displayed in vertical profile 50. In other display strategies, additional sequentially arranged route segments may also be displayed. In still other display strategies, the two route segments 52 disposed on either side of the overlaid route segment may be displayed in the expanded format.

With continued reference to FIG. 2, in some embodiments of system 34 that include communication unit 44, system 34 may be further enabled to display information in vertical profile that is received through communication unit 44. For example, some air traffic control facilities are configured to transmit a data link to the aircraft under their control. Through this data link, the air traffic control facility is able to communicate information to aircraft such as the presence of air traffic in their flight path. The embodiment of system 34 used to render the image illustrated in FIG. 5 may include communication unit 44. Communication unit 44 has received a signal from an air traffic control facility indicating that there is air traffic in the route segment 52 adjacent to the overlaid route segment. Processor 48 has obtained this information from communication unit 44 and has controlled display unit 36 to display a traffic icon 57 corresponding to the location and altitude of the traffic detected by air traffic control.

In some embodiments, data storage unit 38 may store information pertaining to terrain features located on aircraft 32's flight path and may provide that information to processor 48. In such embodiments, processor 48 may be configured to send commands to display unit 36 to display such terrain features in a corresponding route segment 52 when such route segments are displayed in the expanded route segments. An example of this is illustrated in FIG. 5 where terrain features can be seen running through the bottom portions of expanded route segments 51 and 53.

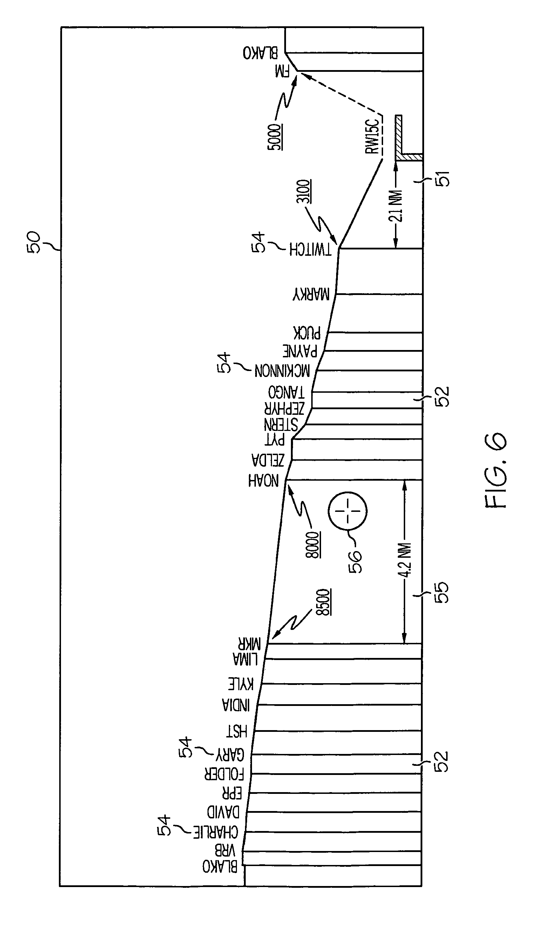

FIG. 6 is vertical profile 50 including route segments 51, 55 in an expanded format, in accordance with still another embodiment. Here, the aircraft operator may select two (or more) route segments 51, 55 for display in the expanded format. In FIG. 6, the route segment 51 that is located between two waypoint designators 54, TWTCH and FM, is displayed in the expanded format. Additionally, the route segment 55 that is located between two other waypoint designators 54, MKR23 and NOAH7 is also displayed in the expanded format. Route segment 55 is overlaid by cursor 56 and is thus displayed in the expanded format as described above. The route segment located between TWTCH and FM is not currently overlaid by cursor 56 but is displayed in the expanded format nevertheless. In this embodiment, processor 48 is configured to permit the aircraft operator to select multiple route segments for display in the expanded format, including route segments 51, 55 which are spaced apart from one another. For example, processor 48 may be configured to detect a mouse click or some other aircraft operator input while cursor 56 is overlaying the overlaid route segment. Processor 48 may be further configured to interpret such a aircraft operator input as a selection of the overlaid route segment (hereinafter "the selected route segment") and may be configured to maintain the selected route segment in the expanded format even after cursor 56 has been removed to a different route segment (e.g., another route segment 52). In other embodiments, system 34 may include multiple input units 42 to permit the aircraft operator to select multiple route segments 52 for expansion, while in still other embodiments, a single input unit 42 may be used to control multiple cursors 56.

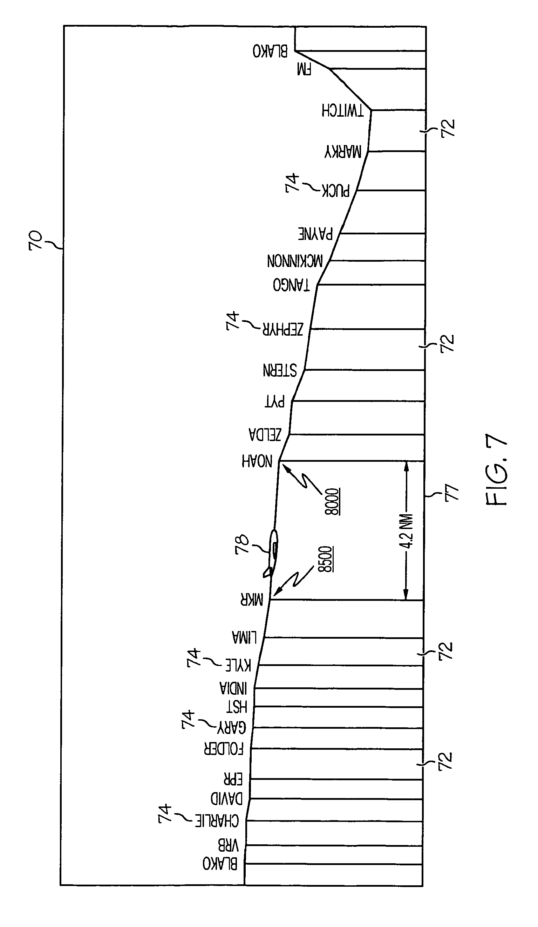

FIGS. 7-9 are non-limiting examples of a vertical profile 70, having route segments 72 and waypoint designators 74, for an IFR approach procedure generated using the system of FIG. 2, in accordance with another embodiment. With continued reference to FIGS. 2 and 7-9, vertical profile 70 has been rendered by an embodiment of system 34 wherein input unit 42 comprises a position determining unit such as a GPS navigation system. In this embodiment, input unit 42 detects the current position and heading of aircraft 32. Processor 48 is configured to obtain the current position and heading of aircraft 32 from input unit 42, to determine which route segment 72 that aircraft 32 is currently flying through (hereinafter "the current route segment"), and to control display unit 36 to display the current route segment in the expanded format. As illustrated in FIG. 7, the current route segment is route segment 77. In some embodiments, processor 48 may further be configured to control display unit 36 to display an aircraft icon 78 within the current route segment. In the illustrated embodiment, aircraft icon 78 resembles an aircraft's profile. In other embodiments, aircraft icon 78 may take any suitable shape.

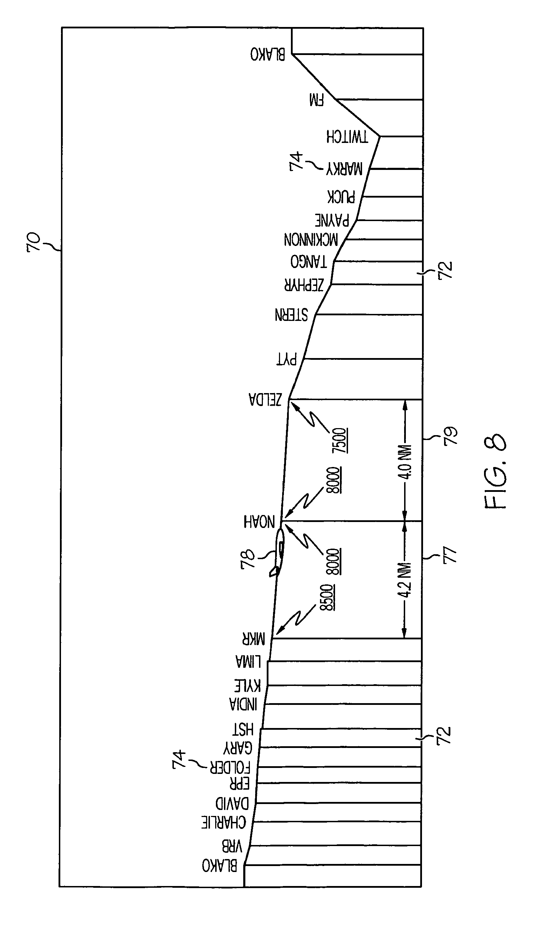

As illustrated in FIGS. 7 and 8, processor 48 may be further configured to control display unit 36 to position aircraft icon 78 within the current route segment at a location that corresponds to the current position of aircraft 32 along its flight path as determined by input unit 42. In this manner, aircraft icon 78 will move across the current route segment as aircraft 32 progresses through its flight path. As illustrated in FIG. 8, processor 48 may be further configured to control display unit 36 to display a route segment 79 that is adjacent to the current route segment (hereinafter "the adjacent route segment") in the expanded format when aircraft 32 approaches to within a predetermined distance of a portion of its flight path that corresponds to the adjacent route segment. In some embodiments, processor 48 may be further configured to immediately compress the current route segment once aircraft 32 enters the adjacent route segment. In other embodiments, processor 48 may be configured to continue to display the current route segment in the expanded format for a predetermined distance or period of time, as stored in the onboard database or from some other external input, after aircraft 32 enters the adjacent route segment.

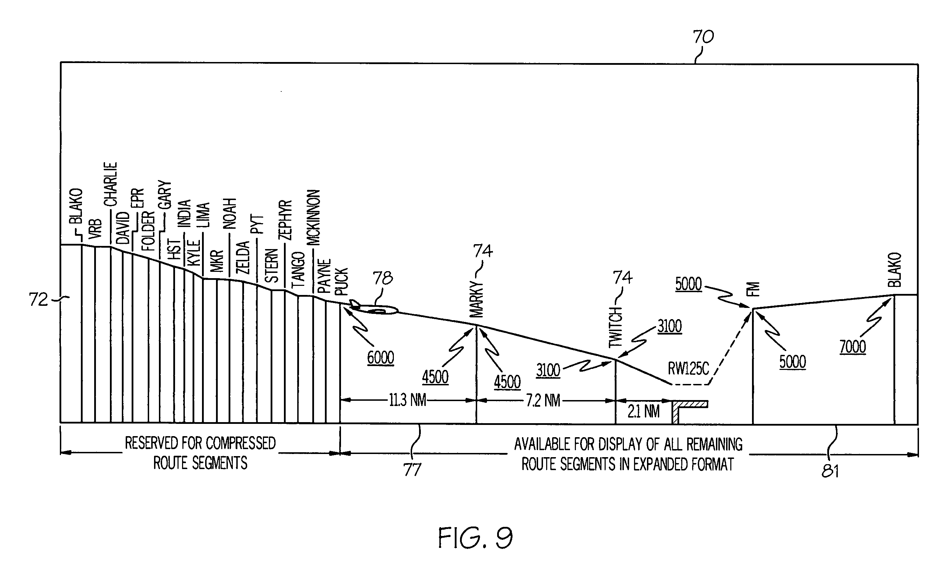

With respect to FIG. 9, another display strategy is illustrated wherein processor 48 is configured to control display unit 36 to display all remaining route segments of a particular flight once there is room enough to do so on the display screen of display unit 36. As used herein, the term "remaining route segments" refers to the current route segment, an aircraft operator selected destination route segment (hereinafter "the destination route segment"), and all route segments 72 disposed between the current route segment and the destination route segment. In some embodiments where this display strategy is employed, system 34 may include a second input unit configured to receive inputs from the aircraft operator to allow the aircraft operator to select the destination route segment.

In the illustrated example, the aircraft operator has selected route segment 81, bounded by waypoint designators 72, FM and BLAKO, as the destination route segment. Each route segment (e.g., route segment 77), when displayed in the expanded format, will have a predetermined width and will consequently consume a predetermined amount of space on the display screen of display unit 36 (e.g. 2.5cm [two inches] per route segment). A display screen having a display area of a predetermined width will be able to display a number of expanded route segments equal to the width of the display area divided by the width of each expanded route segment minus any fractions. This number will vary from display screen to display screen. In some examples, processor 48 may be configured to reserve a minimum amount of display screen space for displaying route segments 72 in the compressed format and to expand all of the remaining route segments only when the space remaining on the display screen can accommodate all of the remaining segments.

By providing a system for displaying a procedure to an aircraft operator in the various manners described above, an aircraft operator will be presented with a vertical profile of any length that, nevertheless, displays relevant route segments and relevant information pertaining thereto in a readable size and format. Furthermore, such vertical profiles will be complete and will not truncate or omit any relevant information.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system (34) for displaying a procedure (40) to an aircraft operator during a flight of an aircraft (32), the system (34) comprising:
a display unit (36);
a data storage unit (38) configured to store the procedure (40);
an input unit (42); and
a processor (48) communicatively connected to the display unit (36), to the data storage unit (38) and to the input unit (42),
wherein the processor (48) is configured to obtain the procedure (40) from the data storage unit (38), to receive an input from the input unit (42), and to provide commands to the display unit (36) to display an entire flight path of the procedure (40) as a vertical profile (50) having at least two compressed portions, and further configured to provide commands to the display unit (36) to display the entire flight path of the procedure (4) as a vertical profile (50) having a first compressed portion of the at least two compressed portions and an expanded portion that corresponds to a second compressed portion of the at least two portions, the expanded portion corresponding to the input.

2. The system (34) of claim 1, wherein:
the first compressed portion comprises a plurality of route segments (52) displayed in a compressed format; and
the expanded portion comprises at least one route segment (51) displayed in an expanded format.

3. The system (34) of claim 2, wherein the expanded portion comprises a single route segment (51).

4. The system (34) of claim 2, wherein the expanded portion comprises two adjacent route segments (51, 53).

5. The system (34) of claim 2, wherein the expanded portion comprises two route segments (51, 55) spaced apart from one another.

6. The system (34) of claim 1, further comprising a communication unit (44) in operative communication with the processor (48), the communication unit (44) configured to receive a wireless transmission of a signal and to provide the signal to the processor (48), and wherein the processor (48) is further configured to control the display unit (36) to display a graphic image (57) corresponding to the signal in the expanded portion of the vertical profile (50).

7. The system (34) of claim 6, wherein the signal includes information relating to air traffic proximate the aircraft (32).

8. The system (34) of claim 1, wherein the input unit (42) is configured to receive an input from the aircraft operator.

9. The system (34) of claim 1, wherein the input unit (42) comprises a cursor control device, wherein the processor (48) is configured to provide commands to the display unit (36) to display a cursor (56) in a manner that corresponds to the input, and wherein the expanded portion of the vertical profile (50) is a portion (51) of the vertical profile (50) that is proximate the cursor (36), whereby the aircraft operator is enabled to selectively expand any desired portion of the vertical profile (50).

10. The system (34) of claim 1, wherein the input unit (42) comprises a position determining unit configured to determine a position and a heading of the aircraft (32).

## Patentansprüche

1. System (34) zur Anzeige eines Verfahrens (40) an einen Flugzeugführer während eines Flugs eines Flugzeugs (32), wobei das System (34) Folgendes umfasst:
eine Anzeigeeinheit (36),
eine Datenspeicherungseinheit (38), die dafür konfiguriert ist, das Verfahren (40) zu speichern,
eine Eingabeeinheit (42) und
einen Prozessor (48), der kommunikativ mit der Anzeigeeinheit (36), mit der Datenspeicherungseinheit (38) und mit der Eingabeeinheit (42) verbunden ist,
wobei der Prozessor (48) dafür konfiguriert ist, das Verfahren (40) von der Datenspeicherungseinheit (38) zu erlangen, eine Eingabe von der Eingabeeinheit (42) zu empfangen und Anweisungen an die Anzeigeeinheit (36) bereitzustellen, um eine gesamte Flugbahn des Verfahrens (40) als ein vertikales Profil (50) anzuzeigen, das wenigstens zwei komprimierte Abschnitte hat, und ferner dafür konfiguriert ist, Anweisungen an die Anzeigeeinheit (36) bereitzustellen, um die gesamte Flugbahn des Verfahrens (40) als ein vertikales Profil (50) anzuzeigen, das einen ersten komprimierten Abschnitt von den wenigstens zwei komprimierten Abschnitten und einen expandierten Abschnitt, der einem zweiten komprimierten Abschnitt von den wenigstens zwei Abschnitten entspricht, hat, wobei der expandierte Abschnitt der Eingabe entspricht.

2. System (34) nach Anspruch 1, wobei:
der erste komprimierte Abschnitt mehrere Routensegmente (52) umfasst, die in einem komprimierten Format angezeigt werden, und
der expandierte Abschnitt wenigstens ein Routensegment (51) umfasst, das in einem expandierten Format angezeigt wird.

3. System (34) nach Anspruch 2, wobei der expandierte Abschnitt ein einziges Routensegment (51) umfasst.

4. System (34) nach Anspruch 2, wobei der expandierte Abschnitt zwei benachbarte Routensegmente (51, 53) umfasst.

5. System (34) nach Anspruch 2, wobei der expandierte Abschnitt zwei mit Abstand voneinander angeordnete Routensegmente (51, 55) umfasst.

6. System (34) nach Anspruch 1, das ferner eine Kommunikationseinheit (44) in wirksamer Kommunikation mit dem Prozessor (48) umfasst, wobei die Kommunikationseinheit (44) dafür konfiguriert ist, eine drahtlose Übermittlung eines Signals zu empfangen und das Signal an den Prozessor (48) bereitzustellen, und wobei der Prozessor (48) ferner dafür konfiguriert ist, die Anzeigeeinheit (36) so zu steuern, dass sie in dem erweiterten Abschnitt des vertikalen Profils (50) ein graphisches Bild (57) anzeigt, das dem Signal entspricht.

7. System (34) nach Anspruch 6, wobei das Signal Informationen in Bezug auf Luftverkehr nahe dem Flugzeug (32) einschließt.

8. System (34) nach Anspruch 1, wobei die Eingabeeinheit (42) dafür konfiguriert ist, eine Eingabe von dem Flugzeugführer zu empfangen.

9. System (34) nach Anspruch 1, wobei die Eingabeeinheit (42) ein Cursor-Steuergerät umfasst, wobei der Prozessor (48) dafür konfiguriert ist, Anweisungen an die Anzeigeeinheit (36) bereitzustellen, um einen Cursor (56) auf eine Weise anzuzeigen, die der Eingabe entspricht, und wobei der expandierte Abschnitt des vertikalen Profils (50) ein Abschnitt (51) des vertikalen Profils (50) ist, der sich nahe dem Cursor (56) befindet, wodurch der Flugzeugführer in die Lage versetzt wird, selektiv einen beliebigen gewünschten Abschnitt des vertikalen Profils (50) zu expandieren.

10. System (34) nach Anspruch 1, wobei die Eingabeeinheit (42) eine Positionsbestimmungseinheit umfasst, die dafür konfiguriert ist, eine Position und einen Steuerkurs des Flugzeugs (32) zu bestimmen.

## Revendications

1. Système (34) pour afficher une procédure (40) à un pilote d'aéronef au cours d'un vol de l'aéronef (32), le système (34) comprenant :
une unité d'affichage (36) ;
une unité d'enregistrement de données (38) conçue pour enregistrer la procédure (40) ;
une unité d'entrée (42) ; et
un processeur (48) relié à l'unité d'affichage (36), à l'unité d'enregistrement de données (38) et à l'unité d'entrée (42) pour communiquer avec celles-ci,
lequel processeur (48) est conçu pour obtenir la procédure (40) auprès de l'unité d'enregistrement de données (38), pour recevoir une entrée depuis l'unité d'entrée (42) et pour fournir des commandes à l'unité d'affichage (36) pour afficher une trajectoire de vol complète de la procédure (40) sous la forme d'un profil vertical (50) comprenant au moins deux tronçons comprimés, et conçu en outre pour fournir des commandes à l'unité d'affichage (36) pour afficher la trajectoire de vol complète de la procédure (40) sous la forme d'un profil vertical (50) comprenant un premier tronçon comprimé parmi lesdits au moins deux tronçons comprimés et un tronçon développé qui correspond à un deuxième tronçon comprimé parmi lesdits au moins deux tronçons, le tronçon développé correspondant à l'entrée.

2. Système (34) selon la revendication 1, dans lequel :
le premier tronçon comprimé comprend une pluralité de segments de route (52) affichés dans un format comprimé ; et
le tronçon développé comprend au moins un segment de route (51) affiché dans un format développé.

3. Système (34) selon la revendication 2, dans lequel le tronçon développé comprend un seul et unique segment de route (51).

4. Système (34) selon la revendication 2, dans lequel le tronçon développé comprend deux segments de route adjacents (51, 53).

5. Système (34) selon la revendication 2, dans lequel le tronçon développé comprend deux segments de route (51, 55) espacés l'un de l'autre.

6. Système (34) selon la revendication 1, comprenant en outre une unité de communication (44) en communication fonctionnelle avec le processeur (48), l'unité de communication (44) étant conçue pour recevoir une transmission sans fil d'un signal et pour fournir le signal au processeur (48), et dans lequel le processeur (48) est en outre conçu pour commander l'unité d'affichage (36) pour afficher une image graphique (57) correspondant au signal dans le tronçon développé du profil vertical (50).

7. Système (34) selon la revendication 6, dans lequel le signal contient des informations relatives à la circulation aérienne à proximité de l'aéronef (32).

8. Système (34) selon la revendication 1, dans lequel l'unité d'entrée (42) est conçue pour recevoir une entrée de la part du pilote d'aéronef.

9. Système (34) selon la revendication 1, dans lequel l'unité d'entrée (42) comprend un dispositif de commande de curseur, dans lequel le processeur (48) est conçu pour fournir des commandes à l'unité d'affichage (36) pour afficher un curseur (56) d'une manière correspondant à l'entrée, et dans lequel le tronçon développé du profil vertical (50) est un tronçon (51) du profil vertical (50) situé à proximité du curseur (56), pour permettre ainsi au pilote d'aéronef de développer de façon sélective un quelconque tronçon souhaité du profil vertical (50).

10. Système (34) selon la revendication 1, dans lequel l'unité d'entrée (42) comprend une unité de détermination de position conçue pour déterminer une position et un cap de l'aéronef (32).
